# EUROPEAN PATENT SPECIFICATION

(11) **EP 3 653 918 B1**
(45) Date of publication and mention of the grant of the patent: **28.12.2022**
(21) Application number: 19208300.4
(22) Date of filing: 11.11.2019
(51) Int. Cl.: F16L 55/027, F01N 1/00, F01N 1/10

(54) **FLUID PULSATION ATTENUATING ARRANGEMENT**
FLUIDPULSATIONSDÄMPFUNGSANORDNUNG
AGENCEMENT D'ATTÉNUATION DE PULSATION DE FLUIDE

(30) Priority: 15.11.2018 US 201816192412
(43) Date of publication of application: 20.05.2020
(73) Proprietor: Hamilton Sundstrand Corporation, Charlotte, NC 28217-4578 (US)
(72) Inventor: ELDER, James, South Windsor, CT 06074 (US)
(74) Representative: Dehns

(56) References cited:
- CN-A- 108 278 141
- DE-A1- 2 649 979
- DE-A1- 19 918 989
- US-A1- 2008 185 218

## Description

### BACKGROUND

The present disclosure relates to fluid and lubrication systems, and more specifically to the attenuation of pressure pulses caused by pumps in fluid and lubrication systems.

Many aircraft engine fuel and lubrication systems include gear pumps to circulate fuel and oil. A gear pump can create pressure pulses that travel upstream of a pump inlet, with the amplitude and frequency of the pulses related to the number of gear teeth and rotation speed of the gear pump. In some cases these pressure pulses can be of the same order or even greater than the fluid inlet pressure. When the pressure pulses match or exceed the fluid inlet pressure, these pressure pulses can cause cavitation, wear, and fatigue in housings and lines in the system. Pressure pulses can also adversely impact pressure sensor readings. Fluid pumps are disclosed in US 2008/185218, CN 108278141, DE 2 649 979 and DE 19 918 989.

### SUMMARY

According to the disclosure, a fluid system is provided as defined by claim 1.

[DELETED]

[DELETED]

Persons of ordinary skill in the art will recognize that other aspects and embodiments of the present invention are possible in view of the entirety of the present disclosure, including the accompanying figures.

### BRIEF DESCRIPTION OF THE DRAWINGS

FIG. 1 is a cross-sectional view of an embodiment of a fluid pulsation attenuator.
FIG. 2 is a schematic diagram of a fluid system that comprises the fluid pulsation attenuator of FIG. 1 and a gear pump according to the invention.
FIG. 3 is a schematic diagram of another fluid system that comprises the fluid pulsation attenuator of FIG. 1 and a gear pump, not according to the invention.
FIG. 4 is a cross-sectional view of another embodiment of the fluid pulsation attenuator.

While the above-identified drawing figures set forth one or more embodiments of the invention, other embodiments are also contemplated. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings. Like reference numerals identify similar structural elements.

### DETAILED DESCRIPTION

The present disclosure provides a fluid pulsation attenuator that attenuates fluid pulsations caused by pumps. The fluid pulsation attenuator includes a pressure vessel enclosing a chamber and a fluid line extending through the pressure vessel and the chamber. Holes are formed in the fluid line inside the pressure vessel and the chamber is filled with a cushion. During operation, fluid flows through the fluid line and any pulsations in the fluid line can expand radially into the holes and be absorbed by the cushion. By absorbing the pulsations in the fluid, the fluid pulse attenuator reduces fatigue to lines and housings in a fluid system that incorporates the fluid pulse attenuator. This reduction in fatigue allows the lines and housings in the fluid system to be made from lighter and thinner structures. Furthermore, the attenuation of the pulsations by the fluid pulsation attenuator allows for more accurate sensor readings of the fluid. The fluid pulsation attenuator is described and discussed below with reference to the figures.

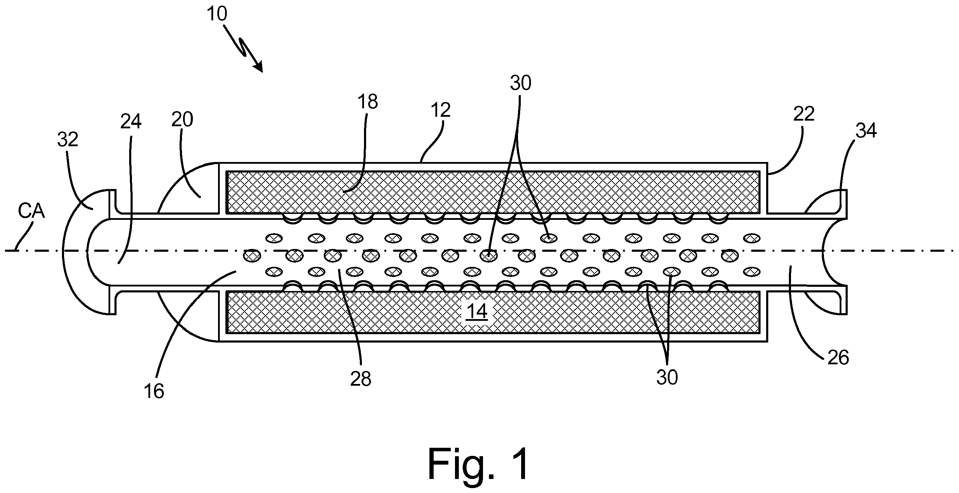

FIG. 1 is a cross-sectional view of fluid pulsation attenuator 10. As shown in FIG. 1, fluid pulsation attenuator 10 includes pressure vessel 12, chamber 14, fluid line 16, cushion 18, and center axis CA. Pressure vessel 12 includes first end 20 and second end 22. Fluid line 16 includes inlet 24, outlet 26, interior passage 28, a plurality of holes 30, first flange 32, and second flange 34.

Pressure vessel 12 is a case or container that encloses chamber 14. As shown in FIG. 1, pressure vessel 12 is an elongated cylinder that extends from first end 20 to second end 22 on center axis CA. While first end 20 and second end 22 are shown as flat in FIG. 1, other embodiments of pressure vessel 12 can include first end 20 and second end 22 that are hemispherical. Fluid line 16 is a tube that extends through an entire length of pressure vessel 12 and extends beyond first end 20 and second 22 of pressure vessel 12. Fluid line 16 is coaxial with pressure vessel 12. Inlet 24 of fluid line 16 extends axially outward from first end 20 of pressure vessel 12. Outlet 26 extends axially outward from second end 22 of pressure vessel 12 opposite inlet 24. In the embodiment of FIG. 1, inlet 24 is the only inlet into pressure vessel 12 and outlet 26 is the only outlet exiting pressure vessel 12. First flange 32 is formed around inlet 24 and second flange 34 is formed around outlet 26. First flange 32 and second flange 34 can be used to connect fluid pulsation attenuator 10 into a fluid system. Pressure vessel 12 and fluid line 16 can be integral, or can be assembled together, and can both be formed from the same material, such as plastic, stainless steel or any other material that non-corrosive when exposed to aircraft engine fuel or lubricant and that can withstand the pressures of a gas turbine engine fuel system or lubrication system.

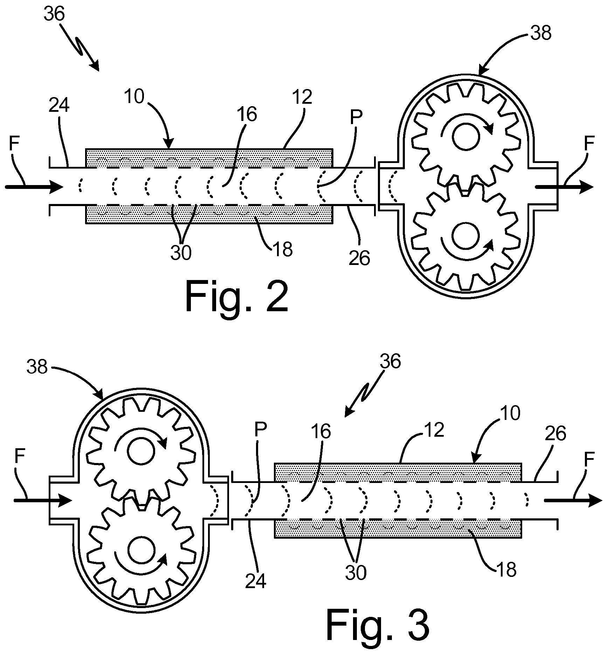

The plurality of holes 30 are formed in a portion of fluid line 16 inside pressure vessel 12. The plurality of holes 30 fluidically connect chamber 14 and interior passage 28 of fluid line 16. As shown in FIG. 1, the plurality of holes 30 is distributed along the length of the portion of fluid line 16 inside pressure vessel 12 between first end 20 and second end 22. Cushion 18 is disposed inside chamber 14. Cushion 18 can be a pad or mass of glass fibers that fills chamber 14 and surrounds the portion of fluid line 16 inside chamber 14. Cushion 18 can also be made from any other material that is chemically and thermally resistant to the fluid intended to flow through fluid pulsation attenuator 10 and capable of absorbing pulsations in the fluid. For example, cushion 18 can also be formed from metal wools. As discussed in greater detail below with reference to FIGS. 2 and 3, fluid pulsation attenuator 10 can be used to attenuate pulsations created by a pump fluidically connected to fluid pulsation attenuator 10.

FIG. 2 is a schematic diagram of fluid system 36 that includes fluid pulsation attenuator 10 and gear pump 38. The fluid pulsation attenuator 10 is connected directly upstream from gear pump 38 such that outlet 26 of fluid pulsation attenuator 10 empties directly into an inlet of gear pump 38. During operation of fluid system 36, gear pump 38 pulls fluid F such that fluid F flows into inlet 24, through fluid line 16, through outlet 26 and then into gear pump 38. Fluid F can be aircraft fuel or lubricating oil. As fluid F flows through fluid line 16, a portion of fluid F can pass through the plurality of holes 30 in fluid line 16 and enter chamber 14 inside pressure vessel 12.

Gear pump 38 circulates fluid F through fluid system 36 incrementally as the gears in gear pump 38 rotate. Because gear pump 38 circulates fluid F incrementally, gear pump 38 can cause pulsations P to occur in fluid F upstream of gear pump 38. As pulsations P travel upstream, pulsations P enter outlet 26 of fluid pulsation attenuator 10. As pulsations P enter pressure vessel 12, pulsations P are able to expand radially through the plurality of holes 30 in fluid line 16 and interact with cushion 18. The fibers of cushion 18 absorb and dissipate the energy of pulsations P, thereby reducing the amplitude of pulsations P as pulsations P travel upstream through fluid pulsation attenuator 10. When reaching inlet 24, the amplitude pulsations P is so reduced that pulsations P have completely dissipated, or dissipated to such a degree that pulsations P are unable to cause any damage or interference in fluid system 36.

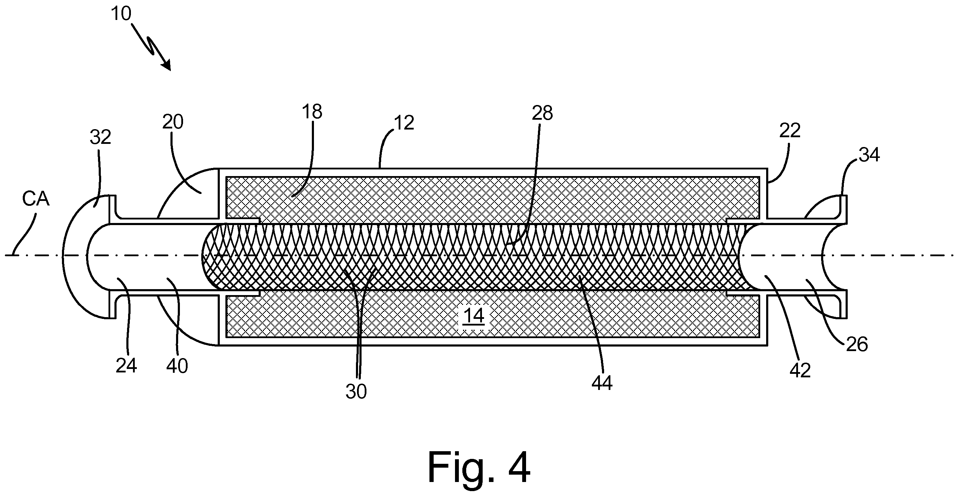

FIG. 3 is a schematic diagram of another embodiment of fluid system 36 that includes fluid pulsation attenuator 10 and gear pump 38. The embodiment of fluid system 36 in FIG. 3 is similar to the embodiment of FIG. 4, except that fluid pulsation attenuator 10 is positioned fluidically downstream to gear pump 38 and thus not according to the invention. In the embodiment of FIG. 4, fluid pulsation attenuator 10 attenuates pulsations P created by gear pump 38 in fluid F downstream of gear pump 38. In other embodiments (not shown) of fluid system 36, a first fluid pulsation attenuator 10 can be positioned upstream of gear pump 38 and a second fluid pulsation attenuator 10 can be positioned downstream of gear pump 38.

FIG. 4 is a cross-sectional view of another embodiment of fluid pulsation attenuator 10. As shown in FIG. 4, fluid line 16 of fluid pulsation attenuator 10 includes first solid tube 40, second solid tube 42, and mesh tube 44 with holes 30. First solid tube 40 extends into first end 20 of pressure vessel 12 and into chamber 14. First solid tube 40 forms inlet 24 of fluid line 16. Second solid tube 42 extends into second end 22 of pressure vessel 12 and into chamber 14. Second solid tube 42 forms outlet 26 of fluid line 16. Mesh tube 44 is disposed inside pressure vessel 12 and traverses chamber 14 and is connected between first solid tube 40 and second solid tube 42. Mesh tube 44 can be formed from a metal mesh or screen with holes 30 extending radially through mesh tube 44. Cushion 18 fills chamber 14 and surrounds mesh tube 44. The embodiment of fluid pulsation attenuator 10 shown in FIG. 4 functions similarly to the embodiment described above with reference to FIGS. 1-3.

In view of the foregoing description, it will be recognized that the present disclosure provides numerous advantages and benefits. For example, the present disclosure provides fluid pulsation attenuator 10 that attenuates pulsations P in fluid F caused by gear pump 38. Fluid pulsation attenuator 10 includes pressure vessel 12 encloses chamber 14 and fluid line 16 extends through pressure vessel 12 and chamber 14. Holes 30 are formed in fluid line 16 inside pressure vessel 12 and chamber 14 is filled by cushion 18. During operation, fluid F flows through fluid line 16 and any pulsations P in fluid line 16 can expand radially into holes 30 and be absorbed by cushion 18. By absorbing pulsations P in fluid F, fluid pulse attenuator 10 reduces fatigue to lines and housings in fluid system 36 that incorporates fluid pulse attenuator 10. This reduction in fatigue allows the lines and housings in fluid system 36 to be made from lighter and thinner structures. Furthermore, the attenuation of pulsations P in fluid F by fluid pulsation attenuator 10 allows for more accurate sensor readings of fluid F.

Any relative terms or terms of degree used herein, such as "substantially", "essentially", "generally", "approximately", and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transitory vibrations and sway movements, temporary alignment or shape variations induced by operational conditions, and the like.

While the invention has been described with reference to an exemplary embodiment(s), it will be understood by those skilled in the art that various changes may be made without departing from the scope of the invention as defined by the claims. Therefore, it is intended that the invention not be limited to the particular embodiment(s) disclosed, but that the invention will include all embodiments falling within the scope of the appended claims.

## Claims

1. A fluid system comprising:
a gear pump (38); and
a fluid pulsation attenuator (10) fluidically connected to and directly upstream from the gear pump, the fluid pulsation attenuator comprising:
an enclosure (12);
a tubular member (16) extending through the enclosure defining a chamber (14) outside of the tubular member but inside of the enclosure, wherein the tubular member comprises:
a wall separating an interior passage (28) of the tubular member and the chamber; and
a plurality of holes (30) formed in the wall fluidically connecting the chamber to the interior passage; and
an energy absorber (18) inside the chamber; and
wherein the fluid pulsation attenuator is upstream from the gear pump.

2. The system of claim 1, wherein the energy absorber comprises a pad of fibers that fills the chamber and surrounds the wall.

3. The system of claim 1 or 2, wherein at least one hole of the plurality of holes (30) extends radially through the wall.

4. The system of claim 1, 2 or 3, wherein the enclosure is cylindrical and the tubular member is coaxial with the enclosure.

5. The system of claim 4, wherein the tubular member further comprises:
an inlet (24) extending axially outward from the enclosure; and
an outlet (26) extending axially outward from the enclosure in a direction that is opposite the inlet.

6. The system of claim 5, wherein the tubular member comprises:
a first solid tube extending into the enclosure and forming the inlet of the tubular member;
a second solid tube extending into the enclosure and forming the outlet of the tubular member; and
a mesh tube inside the enclosure and connected between the first solid tube and the second solid tube.

7. The system as claimed in claim 1, wherein the energy absorber is a cushion that comprises a plurality of fibers and wherein the plurality of fibers fills the chamber and surrounds the fluid line.

8. The system of claim 7, wherein the plurality of fibers comprises glass fibers.

9. The system of claim 7 or 8, wherein the pressure vessel is elongated along a center axis and the fluid line is coaxial with the pressure vessel.

10. The system of claim 9, wherein the fluid line comprises:
an inlet (24) extending axially from a first end of the pressure vessel; and
an outlet (26) extending axially from a second end of the pressure vessel opposite the inlet.

11. The system of claim 10, wherein the plurality of holes is distributed on the fluid line inside the pressure vessel from the first end of the pressure vessel to the second end of the pressure vessel.

12. The system of claim 10 or 11, wherein the fluid line comprises:
a first solid tube extending into the pressure vessel and forming the inlet of the fluid line;
a second solid tube extending into the pressure vessel and forming the outlet of the fluid line; and
a mesh tube inside the pressure vessel and connected between the first solid tube and the second solid tube.

13. The system of any preceding claim, wherein the fluid pulsation attenuator (10) is connected directly upstream from the gear pump (38) such that an outlet (26) of the fluid pulsation attenuator (10) empties directly into an inlet of the gear pump.

## Patentansprüche

1. Fluidsystem, das Folgendes umfasst:
eine Zahnradpumpe (38); und
einen Fluid-Pulsationsdämpfer (10), der fluidisch mit der Zahnradpumpe verbunden und direkt stromaufwärts von dieser angeordnet ist, wobei der Fluid-Pulsationsdämpfer Folgendes umfasst:
ein Gehäuse (12);
ein röhrenförmiges Element (16), das sich durch das Gehäuse erstreckt und eine Kammer (14) außerhalb des röhrenförmigen Elements, aber innerhalb des Gehäuses definiert, wobei das röhrenförmige Element Folgendes umfasst:
eine Wand, die einen inneren Durchgang (28) des röhrenförmigen Elements und die Kammer trennt; und
eine Vielzahl von Löchern (30), die in der Wand ausgebildet sind, die die Kammer fluidisch mit dem inneren Durchgang verbinden; und
einen Energieabsorber (18) innerhalb der Kammer; und
wobei der Fluid-Pulsationsdämpfer stromaufwärts von der Zahnradpumpe angeordnet ist.

2. System nach Anspruch 1, wobei der Energieabsorber ein Faserkissen umfasst, das die Kammer füllt und die Wand umgibt.

3. System nach Anspruch 1 oder 2, wobei sich mindestens ein Loch der Vielzahl von Löchern (30) radial durch die Wand erstreckt.

4. System nach Anspruch 1, 2 oder 3, wobei das Gehäuse zylindrisch ist und das röhrenförmige Element koaxial mit dem Gehäuse ist.

5. System nach Anspruch 4, wobei das röhrenförmige Element ferner Folgendes umfasst:
einen Einlass (24), der sich von dem Gehäuse axial nach außen erstreckt; und
einen Auslass (26), der sich von dem Gehäuse axial nach außen in eine Richtung erstreckt, die dem Einlass entgegengesetzt ist.

6. System nach Anspruch 5, wobei das röhrenförmige Element Folgendes umfasst:
ein erstes massives Rohr, das sich in das Gehäuse erstreckt und den Einlass des röhrenförmigen Elements bildet;
ein zweites massives Rohr, das sich in das Gehäuse erstreckt und den Auslass des röhrenförmigen Elements bildet; und
ein Maschenrohr innerhalb des Gehäuses und das zwischen dem ersten massiven Rohr und dem zweiten massiven Rohr angeschlossen ist.

7. System nach Anspruch 1, wobei der Energieabsorber ein Kissen ist, das eine Vielzahl von Fasern umfasst, und wobei die Vielzahl von Fasern die Kammer füllen und die Fluidleitung umgeben.

8. System nach Anspruch 7, wobei die Vielzahl von Fasern Glasfasern umfasst.

9. System nach Anspruch 7 oder 8, wobei der Druckbehälter entlang einer Mittelachse langgestreckt ist und die Fluidleitung koaxial mit dem Druckbehälter ist.

10. System nach Anspruch 9, wobei die Fluidleitung Folgendes umfasst:
einen Einlass (24), der sich axial von einem ersten Ende des Druckbehälters erstreckt; und
einen Auslass (26), der sich axial von einem zweiten Ende des Druckbehälters gegenüber dem Einlass erstreckt.

11. System nach Anspruch 10, wobei die Vielzahl von Löchern auf der Fluidleitung innerhalb des Druckbehälters von dem ersten Ende des Druckbehälters zu dem zweiten Ende des Druckbehälters verteilt ist.

12. System nach Anspruch 10 oder 11, wobei die Fluidleitung Folgendes umfasst:
ein erstes massives Rohr, das sich in den Druckbehälter erstreckt und den Einlass der Fluidleitung bildet;
ein zweites massives Rohr, das sich in den Druckbehälter erstreckt und den Auslass der Fluidleitung bildet; und
ein Maschenrohr innerhalb des Druckbehälters und das zwischen dem ersten massiven Rohr und dem zweiten massiven Rohr angeschlossen ist.

13. System nach einem der vorhergehenden Ansprüche, wobei der Fluid-Pulsationsdämpfer (10) direkt stromaufwärts von der Zahnradpumpe (38) angeschlossen ist, so dass ein Auslass (26) des Fluid-Pulsationsdämpfers (10) direkt in einen Einlass der Zahnradpumpe mündet.

## Revendications

1. Système de fluide comprenant :
une pompe à engrenages (38) ; et
un atténuateur de pulsations de fluide (10) connecté fluidiquement à et directement en amont de la pompe à engrenages, l'atténuateur de pulsations de fluide comprenant :
une enceinte (12) ;
un élément tubulaire (16) s'étendant à travers l'enceinte définissant une chambre (14) en dehors de l'élément tubulaire mais à l'intérieur de l'enceinte, dans lequel l'élément tubulaire comprend :
une paroi séparant un passage intérieur (28) de l'élément tubulaire et la chambre ; et
une pluralité de trous (30) formés dans la paroi connectant fluidiquement la chambre au passage intérieur ; et
un absorbeur d'énergie (18) à l'intérieur de la chambre ; et
dans lequel l'atténuateur de pulsations de fluide est en amont de la pompe à engrenages.

2. Système selon la revendication 1, dans lequel l'absorbeur d'énergie comprend un coussinet de fibres qui remplit la chambre et entoure la paroi.

3. Système selon la revendication 1 ou 2, dans lequel au moins un trou de la pluralité de trous (30) s'étend radialement à travers la paroi.

4. Système selon la revendication 1, 2 ou 3, dans lequel l'enceinte est cylindrique et l'élément tubulaire est coaxial à l'enceinte.

5. Système selon la revendication 4, dans lequel l'élément tubulaire comprend en outre :
une entrée (24) s'étendant axialement à l'extérieur de l'enceinte ; et
une sortie (26) s'étendant axialement à l'extérieur de l'enceinte dans une direction qui est opposée à l'entrée.

6. Système selon la revendication 5, dans lequel l'élément tubulaire comprend :
un premier tube solide s'étendant dans l'enceinte et formant l'entrée de l'élément tubulaire ;
un second tube solide s'étendant dans l'enceinte et formant la sortie de l'élément tubulaire ; et
un tube à maille à l'intérieur de l'enceinte et connecté entre le premier tube solide et le second tube solide.

7. Système selon la revendication 1, dans lequel l'absorbeur d'énergie est un coussin qui comprend une pluralité de fibres et dans lequel la pluralité de fibres remplit la chambre et entoure la conduite de fluide.

8. Système selon la revendication 7, dans lequel la pluralité de fibres comprend des fibres de verre.

9. Système selon la revendication 7 ou 8, dans lequel le récipient sous pression est allongé le long d'un axe central et la conduite de fluide est coaxiale avec le récipient sous pression.

10. Système selon la revendication 9, dans lequel la conduite de fluide comprend :
une entrée (24) s'étendant axialement depuis une première extrémité du récipient sous pression ; et
une sortie (26) s'étendant axialement depuis une seconde extrémité du récipient sous pression opposée à l'entrée.

11. Système selon la revendication 10, dans lequel la pluralité de trous est distribuée sur la conduite de fluide à l'intérieur du récipient sous pression depuis la première extrémité du récipient sous pression à la seconde extrémité du récipient sous pression.

12. Système selon la revendication 10 ou 11, dans lequel la conduite de fluide comprend :
un premier tube solide s'étendant dans le récipient sous pression et formant l'entrée de la conduite de fluide ;
un second tube solide s'étendant dans le récipient sous pression et formant la sortie de la conduite de fluide ; et
un tube à maille à l'intérieur du récipient sous pression et connecté entre le premier tube solide et le second tube solide.

13. Système selon une quelconque revendication précédente, dans lequel l'atténuateur de pulsations de fluide (10) est connecté directement en amont de la pompe à engrenages (38) de sorte qu'une sortie (26) de l'atténuateur de pulsations de fluide (10) se vide directement dans une entrée de la pompe à engrenages.
